(19) Europäisches Patentamt
European Patent Office
Office européen des brevets

(11) Veröffentlichungsnummer : **0 490 201 B1**

(12) # EUROPÄISCHE PATENTSCHRIFT

(45) Veröffentlichungstag der Patentschrift : **18.05.94 Patentblatt 94/20**

(51) Int. Cl.[5] : **G11B 5/702,** G11B 5/02

(21) Anmeldenummer : **91120616.7**

(22) Anmeldetag : **29.11.91**

(54) **Magnetische Aufzeichnungsträger.**

(30) Priorität : **13.12.90 DE 4039749**

(43) Veröffentlichungstag der Anmeldung : **17.06.92 Patentblatt 92/25**

(45) Bekanntmachung des Hinweises auf die Patenterteilung : **18.05.94 Patentblatt 94/20**

(84) Benannte Vertragsstaaten : **DE FR GB NL**

(56) Entgegenhaltungen :
**EP-A- 0 002 241**
**EP-A- 0 193 084**
**DE-A- 3 814 536**
**PATENT ABSTRACTS OF JAPAN vol. 14, no. 226 (P-1047)14.Mai 1990 & JP-A-2 053 219**

(73) Patentinhaber : **BASF Magnetics GmbH**
**Dynamostrasse 3**
**D-68165 Mannheim (DE)**

(72) Erfinder : **Keppeler, Uwe, Dr.**
**Ungsteiner Strasse 22**
**W-6700 Ludwigshafen (DE)**
Erfinder : **Dikow, Hermann, Dr.**
**Birkenallee 74**
**W-6832 Hockenheim (DE)**
Erfinder : **Auweter, Helmut, Dr.**
**Lessingstrasse 35**
**W-6703 Limburgerhof (DE)**
Erfinder : **Bobrich, Michael, Dr.**
**In den Muehlgaerten 3**
**W-6737 Boehl-Iggelheim (DE)**
Erfinder : **Rudolph, Jochen, Dr.**
**Kastanienweg 73**
**W-6915 Dossenheim (DE)**
Erfinder : **Brodt, Gregor, Dr.**
**Giessener Strasse 6**
**W-6148 Heppenheim (DE)**
Erfinder : **Kohl, Albert**
**Schlossstrasse 26**
**W-6711 Laumersheim (DE)**
Erfinder : **Lenz, Werner, Dr.**
**Heinrich-Baermann-Strasse 14**
**W-6702 Bad Duerkheim (DE)**
Erfinder : **Suettinger, Rudolf, Dr.**
**Karl-Christ-Strasse 17**
**W-6900 Heidelberg (DE)**

(74) Vertreter : **Langfinger, Klaus-Dieter, Dr.**
**BASF Aktiengesellschaft, Patentabteilung ZDX - C 6**
**D-67056 Ludwigshafen (DE)**

EP 0 490 201 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem Metallsulfonatgruppen aufweisenden, verzweigten Polyurethanelastomeren mit Harnstoffgruppen an den Kettenenden besteht.

An magnetische Aufzeichnungsträger werden hinsichtlich der Aufzeichnung, der Wiedergabe und auch der Alterungsbeständigkeit immer höhere Anforderungen gestellt. Um diesen Anforderungen gerecht zu werden, kommt dem Bindemittel eine zunehmende Bedeutung zu.

So wird zur Verbesserung der magnetischen Eigenschaften eine erhöhte Packungsdichte des magnetischen Materials in der Schicht angestrebt, was eine Verringerung des Bindemittelanteils in der Schicht zur Folge hat. Ebenso wird versucht, ein verbessertes Signal-Rausch-Verhältnis durch die Verwendung immer feinteiligerer magnetischer Materialien mit ausgeprägter Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozeß als auch das Erreichen einer guten Dispersionsstabilität erheblich erschwert. Insgesamt müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte sowie eine Erhöhung der Abrieb- und der Verschleißfestigkeit gefordert. Des weiteren gilt, daß die mechanische Stabilität der Magnetschicht insbesondere bei hoher Temperatur und hoher Luftfeuchte ebenfalls gewährleistet sein muß.

Es ist bekannt, daß Magnetschichten, die starken mechanischen Beanspruchungen unterworfen werden, als Bindemittel sich vorteilhaft erweisende Polyurethanelastomere enthalten. Besonders bewährt haben sich Polyesterurethane, wie sie in der DE-B 1 106 959, DE-B 2 753 694, EP-A 0 069 955 oder in der US-A 2 899 411 beschrieben sind.

Diese Bindemittel sind jedoch im Zusammenhang mit den oben beschriebenen Forderungen und Maßnahmen nicht verwendbar. In vielen Fällen wird die Pigmentbenetzung und -dispergierung ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechter Ausrichtbarkeit und damit zu verringerten Packungsdichten führt. Aus diesem Grund werden zur Erleichterung des Dispergiervorgangs niedermolekulare Dispergiermittel in kleineren Mengen hinzugefügt. Diese Dispergiermittel zeigen zwar ein gutes Aufteilungsverhalten, stabilisieren jedoch die Dispersion nur schlecht. Daher werden oft noch höhermolekulare Dispergierharze als zusätzliche Komponente verwendet. In DE-A 30 26 357 oder DE 31 37 293 wird beispielsweise der Zusatz von Polyesterharzen, die $SO_3M$-Gruppen aufweisen, beschrieben.

Diese Verfahren zur Verbesserung des Dispergiervorgangs weisen jedoch Nachteile auf. So können niedermolekulare Dispergiermittel bei ungünstigen Klimabedingungen, wie hohe Temperatur und/oder hohe Luftfeuchtigkeit leicht ausschwitzen. Dadurch kommt es in Aufnahme- bzw. Wiedergabegeräten zu Ablagerungen an allen bandberührenden Teilen, besonders am Kopf, wodurch Pegeleinbrüche verursacht werden. Beim Einsatz von Dispergierharzen kann es andererseits zu Verträglichkeitsproblemen in der Dispersion kommen. Diese Stoffe sind oft auch keine Filmbildner und bewirken daher ebenfalls ein Blocken. Weiterhin sind die mechanischen Eigenschaften dieser Dispergierharze oft nicht an das Eigenschaftsniveau des als Hauptbindemittel verwendete Polyurethans angepaßt. Eine Verschlechterung der mechanischen Eigenschaften bedeutet immer auch eine Erhöhung des Abriebs.

Zur Verbesserung der Dispergiereigenschaften des Polyurethanbindemittels selbst wurde schon frühzeitig der Vorschlag gemacht, polare Gruppen in das Bindemittel einzubauen. Diese polaren Gruppen können prinzipiell über jede Komponente, die bei der Herstellung des Polyurethans verwendet wird, eingeführt werden. Am häufigsten ist die Verwendung von Polyestern mit polaren Gruppen (u.a. DE-A 28 33 845). Der Einbau von Diolen, die zusätzlich polare Gruppen tragen, wird beispielsweise in der JP-A 57 092 421, der DE-OS 38 14 536 oder der EP-A 193 084 beschrieben. Der nachträgliche Einbau der polaren Gruppen durch $S_N$-Reaktion an den OH-Endgruppen der Polyurethane wird in JP-A 57 092 422 offenbart. Die bisher beschriebenen, polare Gruppen tragenden Polyurethane zeigen zwar ein verbessertes Dispergierverhalten, die Verbesserung ist aber für viele Ansprüche noch nicht ausreichend.

Weiterer Nachteil aller beschriebenen Polyurethane ist, daß die erforderliche Elastizität häufig mit einer zu geringen Härte und einer Tendenz zur Oberflächenklebrigkeit einhergeht. Es ist daher Stand der Technik, entsprechende Polyurethane mit anderen Bindemitteln zu kombinieren.

Vorgeschlagene Bindemittel-Kombinationen sind z. B. Mischungen aus Polyurethanen mit Phenoxyharzen, mit Vinylidenchlorid-Acrylnitril-Copolymerisaten, mit Vinylchlorid-Acrylsäureester-Copolymerisaten, mit Polycarbonaten oder Polyestern. Beispielhaft sei die DE-A 32 39 160 erwähnt. Diese Bindemittelkombinationen führen zwar zu einer Verbesserung der mechanischen Eigenschaften der Magnetschicht,

das Dispergierverhalten einer derartigen Kombination ist aber verringert. Dadurch wirken sich die besonderen Eigenschaften der magnetischen Materialien nur noch unbefriedigend aus. Dies zeigt sich durch einen niedrigeren Richtfaktor, eine geringere Remanenz und damit durch eine geringere Höhen- und Tiefenempfindlichkeit sowie eine unbefriedigendere Aussteuerbarkeit der resultierenden Aufzeichnungsträger.

Eine Möglichkeit, die Härte der Polyurethane zu erhöhen, ist die Erhöhung der Urethan- und Harnstoffgruppenkonzentration. Derartige Maßnahmen führen jedoch sehr schnell zu Produkten, die in gängigen Lösungsmitteln, wie z. B. THF, unlöslich werden (EP-A 01 43 337). Gemäß der DE-A 31 37 293 werden zur Erhöhung der Härte nichtmagnetische Teilchen zugemischt.

Diese beschriebenen Maßnahmen reichen jedoch nicht aus, die angestiegenen Anforderungen an das Bindemittelsystem gleichzeitig zu erfüllen. Zudem ist zum Erreichen einzelner Effekte oft eine Kombination der Polyurethane mit anderen Bindemitteln zwingend notwendig.

Es war somit Aufgabe der Erfindung, thermoplastische und elastische in Ethern und/oder Ketonen gut lösliche Polyurethane bereitzustellen, die hervorragende Dispergiereigenschaften aufweisen und durch deren Einsatz die Herstellung von Magnetschichten mit hoher mechanischer Stabilität und auch mit verbesserten Aufzeichnungseigenschaften möglich wird.

Es wurde nun gefunden, daß magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, die aufgabengemäß geforderten Eigenschaften haben, wenn als thermoplastisches Polyurethan ein in Ethern bzw. Ketonen lösliches, isocyanatgruppenfreies, verzweigtes Polyurethan mit OH-gruppenhaltigen oder OH-gruppenfreien Harnstoffgruppen an den Kettenenden und einem Molekulargewicht zwischen 30 000 und 200 000 eingesetzt wird, welches aus

A) 1 Mol eines Polydiols mit einem Molekulargewicht zwischen 400 und 10 000
B) 0,3 bis 10 Mol eines Gemisches aus
  B1) mindestens einem Diol mit 2 bis 18 Kohlenstoffatomen und
  B2) einem mindestens eine Sulfonatgruppe aufweisenden Diol,
C) 0,01 bis 1 Mol eines Tri- oder Polyols mit 3 bis 25 Kohlenstoffatomen,
D) 1,3 bis 13 Mol mindestens eines Diisocyanats mit 6 bis 30 Kohlenstoffatomen und
E) 0,09 bis 2 Mol eines Aminoalkohols oder eines OH-gruppenfreien Monoamins mit 2 bis 16 Kohlenstoffatomen

hergestellt wird, mit der Maßgabe, daß das Verhältnis der OH-Gruppen der Komponenten A bis C zu den NCO-Gruppen der Komponente D zu den Amingruppen der Komponente E wie 1 : 1,03 bis 1,3 : 0,03 bis 0,3 beträgt.

Das in den erfindungsgemäßen Aufzeichnungsträgern eingesetzte verzweigte Polyurethan weist demnach zwischen 4 und 30, insbesondere zwischen 6 und 24 und bevorzugt zwischen 8 und 24 OH-Gruppen pro Molekül auf, die über Harnstoffgruppen mit den Kettenenden verknüpft sind. Dabei ist zur Erzielung der erforderlichen mechanischen Eigenschaften mindestens ein Molekulargewicht (Gewichtsmittel) von 30 000 und höchstens von 200 000 erforderlich. Bevorzugt eignen sich Molekulargewichte von 60 000 bis 110 000. Eine OH-Zahl von größer 30 ist bei hohen Molekulargewichten jedoch von Nachteil, da bei zu hohen OH-Zahlen die Moleküle zu stark verzweigt sind, wodurch die Herstellung und Verwendung erschwert wird, denn eine zu hohe Verzweigung führt zu Molekülknäueln und zu anvernetzten Polymeren. 1 bis 15, insbesondere 2 bis 10 Verzweigungen mit einer rechnerisch mittleren Kettenlänge von über 10 000 führen zu den angestrebten Polyurethanelastomeren.

Die derart aufgebauten Polyurethane haben im allgemeinen im unvernetzten Zustand eine Härte nach DIN 53 157 von 18 - 140 s. Sie haben ferner einen E-Modul (Elastizitätsmodul gemäß DIN 53 457) von 20 - 2500 $N/mm^2$, eine Reißdehnung von > 100 % (DIN 53 455) und eine Reißfestigkeit von > 30 $N/mm^2$ (DIN 53 455). Der Erweichungspunkt liegt zwischen 80 und 180°C.

In einer weiteren Ausgestaltung des erfindungsgemäßen Aufzeichnungsträgers kann der Dispersion, im wesentlichen bestehend aus dem magnetischen Material und dem speziellen Polyurethan, noch vor dem Auftragen auf das Trägermaterial ein Polyisocyanat zugesetzt werden. Für diese Vernetzung kann eine Vielzahl organischer Di-, Tri- oder Polyisocyanate oder Isocyanatprepolymerer bis zu einem Molgewicht von 10 000, vorzugsweise zwischen 500 und 3 000, verwendet werden. Bevorzugt sind Polyisocyanate bzw. Isocyanatprepolymere, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol. Durch das Zumischen der vorgenannten Polyisocyanate bevorzugt zur fertigen Magnetdispersion vor dem Auftragen auf den Träger, werden die mechanischen Eigenschaften der erfindungsgemäßen Aufzeichnungsträger bei Verringerung der Thermoplastizität der Magnetschicht in ihrer Abriebfestigkeit nochmals sehr wesentlich verbessert. Die Menge der dafür zugesetzten Polyisocyanate beträgt im allgemeinen etwa 1 bis 20 Gew.%, bevorzugt 4 bis 15 %, bezogen auf die Gesamtmenge des Bindemittels.

Das die erfindungsgemäßen Aufzeichnungsträger charakterisierende Polyurethan wird aus an sich bekannten Komponenten aufgebaut.

Als Komponente A) wird ein Polyesterol, Polyetherol oder Polycarbonat mit einem Molekulargewicht von 400 bis 10.000, bevorzugt von 500 bis 2.500, eingesetzt. Die Polydiole sind zweckmäßigerweise überwiegend lineare Polymere mit zwei endständigen OH-Gruppen. Die Säurezahl der Polydiole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 8 C-Atomen, mit aliphatischen oder cycloaliphatischen Glykolen, bevorzugt mit 2 bis 20 C-Atomen oder durch Polymerisation von Lacton mit 3 bis 10 C-Atomen herstellen. Als Dicarbonsäuren lassen sich beispielsweise Glutarsäure, Pimelinsäure, Korksäure, Sebacinsäure, Dodecansäure, Terephthalsäure, Isophthalsäure und vorzugsweise Adipinsäure, Bernsteinsäure und Terephthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele für geeignete Glykole sind Diethylenglykol, Pentandiol, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3, 1,4-Dimethylolcyclohexan, 1,4-Diethanolcyclohexan, 1,4-Diethanolpropan. Als Lactone für die Herstellung der Polyesterole eignen sich z. B. $\alpha,\alpha$-Dimethyl-$\beta$-propiolacton, Butyrolacton und vorzugsweise Caprolacton. Die Polycarbonate sind im allgemeinen auf Hexandiol-1,6-Basis aufgebaut.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffatomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Als Komponente B 1) werden entweder aliphatische Diole mit 2 bis 10 C-Atomen, vorzugsweise 4 bis 6 C-Atomen, eingesetzt, so z. B. Ethandiol-1,2, Propandiol-1,3, Butandiol-1,4, Hexandiol-1,6, Pentandiol-1,5, Decandiol-1,10, 2-Methyl-1,3-Propandiol, 2-Methyl-2-butyl-1,3-propandiol, 2,2-Dimethyl-1,4-butandiol, Hydroxypivalinsäureneopentylglykolester, Diethylenglykol, Triethylenglykol und Methyldiethanolamin, 1,4-Dimethylolcyclohexan, 1,4-Diethanolcyclohexan, oder aromatische Diole wie z.B. Ethylen- oder Propylenaddukte des Bisphenols A oder Ethylenoxid-Addukte des Hydrochinons.

Die Diole können einzeln oder als Gemische verwendet werden. In untergeordnetem Maße können auch Diamine mit 2 bis 15 Kohlenstoffatomen wie Ethylendiamin, 1,6-Hexamethylendiamin, 4,9-Dioxododecan-1,12-diamin, 4,4'-Dimaminodiphenylmethan oder Aminoalkohole wie z.B. Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Bausteine B1 die genannten Diole auch ganz oder teilweise durch Wasser ersetzt werden.

Die die Komponente B 2) bildenden Diole enthalten mindestens eine -$SO_3$M-Gruppe. Beispielhaft seien hierfür Verbindungen der Formel (I) genannt, wie sie in DE 34 07 562 beschrieben sind.

Formel I:

$$R^1CH_2O-(C_2H_4O-)_n(C_3H_7O-)_mCH_2CHR^3CH_2SO_3X ,$$

wobei

$R^1$ =

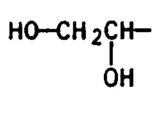 ,

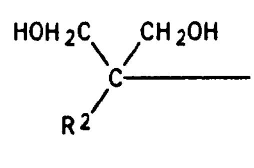 ,

$R^2$ = $CH_3$-, $C_2H_5$-, $C_3H_7$-,
$R^3$ = H- oder $CH_3$-,
X = H-, Alkali- oder Ammonium,
n = 0 bis 100,
m = 0 bis 50 und
$n + m \geqq 1$
ist,
sowie Diole der Formel (II), wie sie teilweise in der DE-A-39 27 630 beschrieben sind:

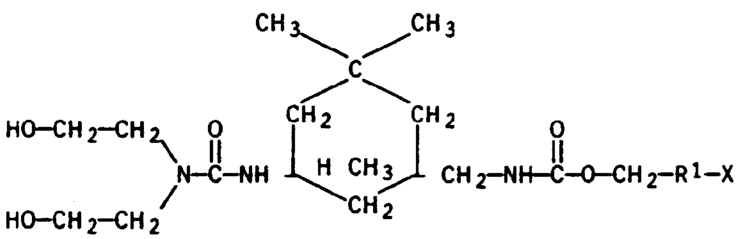

(I)

in welcher
$R^1$ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder

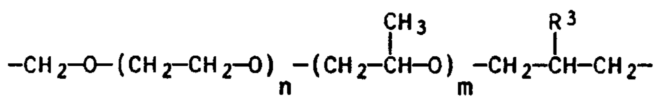

$R^3$ = H oder $CH_3$
n = 0 bis 100
m = 0 bis 50
$n + m \geqq 1$ und
X = $-SO_3M$
worin M für H, Li, Na, K, Ammonium oder Alkyl steht, darstellt.

Das Verhältnis der Komponenten B1 und B2 zueinander wird zweckmäßigerweise entsprechend der spezifischen Oberfläche des eingesetzten magnetischen Materials gewählt.

Die Triole für die Komponente C) sind Verbindungen mit 3 bis 10, vorzugsweise 3 bis 6 C-Atomen. Beispiele für entsprechende Triole sind Glycerin oder Trimethylolpropan. Geeignet sind auch niedermolekulare Umsetzungsprodukte von z. B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt. Als Polyole lassen sich hierbei beispielsweise Erythrit, Pentaerythrit und Sorbit einsetzen.

Zur Bildung der NCO-gruppenhaltigen Zwischenprodukte werden die unter A, B und C genannten Komponenten mit aliphatischen, cycloaliphatischen oder aromatischen Diisocyanaten mit 6 bis 30 C-Atomen (Komponente D) umgesetzt. Hierfür eignen sich Verbindungen wie Toluylen-2,4-diisocyanat, Toluylen-2,6-diisocyanat, m- bzw. p-Tetramethylyloldiisocyanat, m-Phenylendiisocyanat, 4-Chlor-1,3-phenylendiisocyanat, 1,5-Naphthylendiisocyanat; 1,5-Hexamethylendiisocyanat, 1,6-Hexamethylendiisocyanat, 1,4-Cyclohexylendiisocyanat und 1,5-Tetrahydronaphthylendiisocyanat, 4,4'-Diphenylmethandiisocyanat, Dicyclohexylmethandiisocyanat, Isophorondiisocyanat oder Gemische davon.

Danach werden die NCO-gruppenhaltigen Zwischenprodukte aus den Komponenten A bis D mit den Aminoalkoholen (Komponente E) zu den OH-gruppenhaltigen Polyurethanharnstoffelastomeren umgesetzt. Diese Aminoalkohole mit 2 bis 16, vorzugsweise 3 bis 6 C-Atomen sind u. a. Monoethanolamin, Methylisopropanolamin, Ethylisopropanolamin Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen.

Das Verhältnis der Komponente A) bis D) beträgt 1,35 bis 13 Mol Diisocyanat je Mol Polydiol bei Verwendung von 0,3 bis 10 Mol des Diols mit 2 bis 20 C-Atomen und 0,05 bis 0,5 Mol Triol, wobei die Menge des verwendeten Diols teilweise von dem Molekulargewicht des verwendeten Polydiols abhängt. Aus praktischen Gründen ist es jedoch zweckmäßig, einen Diisocyanatüberschuß von mindestens 3 % über der zur vollständigen Umsetzung der Reaktionsteilnehmer erforderlichen Menge zu verwenden, so daß das Verhältnis der Zahl der eingesetzten Isocyanatgruppen zur Zahl der Hydroxylgruppen in der Reaktionsmischung 1,03 bis 1,3, vorzugsweise 1,05 bis 1,15 beträgt. Der NCO-Überschuß wird dann stöchiometrisch mit den NH-Gruppen des Aminoalkohols umgesetzt, so daß das Verhältnis der Komponenten A) bis C) : D : E wie 1 : 1,03 bis 1,3 : 0,03 bis 0,3, bevorzugt 1 : 1,05 bis 1,15 : 0,05 bis 0,15 beträgt.

Die so aufgebauten thermoplastischen, elastischen OH-gruppenhaltigen Polyurethane werden in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist nicht möglich. Da sich aufgrund der Anwesenheit des Triols und der Reaktion von Amin mit NCO-Gruppen bei der Substanzpolyaddition zumindest teilweise Gel-Teilchen bilden, wird in Lösung gearbeitet. Allgemein wird bei der Lösungspolyaddition die Gefahr einer örtlichen Übervernetzung, wie sie bei der Substanzpolyaddition auftritt, vermieden.

Beim 2-Stufenverfahren sind je nach Reaktionsbedingungen (Lösungsmittelmenge, Reaktionswärme) zwei unterschiedliche Fahrweisen möglich.

Fahrweise 1: Das Diisocyanat wird mit etwas Lösungsmittel vorgelegt, dann werden die Komponenten A, B, C und gegebenenfalls der Katalysator und die Hilfs- und Zusatzstoffe in Lösungsmittel bei Temperaturen von 20 bis 90°C, vorzugsweise 30 bis 70°C, in 0,2 bis 5 Stunden zugegeben. Die Komponenten werden bis zum gewünschten NCO-Gehalt umgesetzt, dann wird in der 2. Stufe die Komponente E zugesetzt.

Fahrweise 2: Bei diesem Verfahren werden alle Ausgangskomponenten A bis D in einem Teil des Lösungsmittels gelöst, so daß eine Lösung mit einem Feststoffgehalt von 15 bis 50 Gew.% gebildet wird. Anschließend wird die Lösung unter Rühren auf eine Temperatur zwischen 20 und 90°C, vorzugsweise zwischen 30 und 70°C, gegebenenfalls nach der Katalysatorzugabe, erwärmt. Dann werden die Komponenten bis zum gewünschten NCO-Gehalt umgesetzt, danach in der 2. Stufe die Komponente E zugegeben.

Beim 2-Stufenverfahren wird in der ersten Stufe mit einem NCO-Überschuß, gegenüber den Komponenten A bis C gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane werden vorzugsweise Tetrahydrofuran verwendet. Selbstverständlich können je nach Anwendungsgebiet die Polyurethane auch in anderen polaren Lösungsmitteln, wie Dioxan, Cyclohexanon, Methylethylketon, Dimethylformamid, N-Methylpyrrolidon, Dimethylsulfoxid oder Ethylglykolacetat hergestellt werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinnlaurat. Die geeignete Katalysatormenge ist abhängig von der Wirksamkeit des in Frage kommenden Katalysators. Im allgemeinen hat es sich zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die die erfindungsgemäßen Aufzeichnungsträger kennzeichnenden Polyurethane lassen sich als alleinige Bindemittel für die Herstellung von Magnetschichten verwenden. Es kann jedoch für spezielle Anwendungszwecke bei magnetischen Aufzeichnungsträgern zweckmäßig sein, eine zweite Bindemittelkomponente in Mengen von 5 bis zu 50 Gewichtsteilen, vorzugsweise von 10 bis 40 Gewichtsteilen, bezogen auf die resultierende Gesamtbindemittelmenge, zuzusetzen.

Die im Bindemittelgemisch mit den angegebenen speziellen Polyurethanen enthaltenden physikalisch trocknenden Bindemitteln sind bekannt. Es handelt sich hierbei um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben eine Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 mPas, gemessen bei 20°C mit einer Lösung von 5 g Polyvinylformal in 100 ml Phenol-Toluol (1 : 1) mit einem K-Wert nach Fikentscher von 40 bis 70 (1 %ig in DMF). In gleicher Weise geeignet sind neben dem Polyvinylformal Vinylchlorid-diol-mono- oder -di(meth)acrylat-Copolymerisate, die sich z. B. in an sich bekannter weise durch Lösungscopolymerisation oder Suspensionscopolymerisation von Vinylchlorid und dem Diol-monomethacrylat oder -monoacrylat herstellen lassen. Das hierfür zum Einsatz gelangende Diolmono- oder -di-acrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglycol, 1,4-Butandiol und bevorzugt

Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder -methacrylat-Gehalt von 5 bis 50 Gew.%. Besonders geeignete Copolymerisate besitzen vorzugsweise einen Gehalt von 70 bis 90 Gew.% vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 mPas auf. Der K-Wert nach H. Fikentscher (Cellulosechemie 13 (1932), S. 58 ff.) der besonders geeigneten Produkte liegt zwischen 30 und 50, vorzugsweise bei etwa 40 (1 % in DMF). Außerdem lassen sich auch Phenoxyharze einsetzen, deren Konstitution der Formel

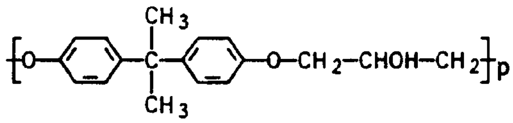

mit p annähernd gleich 100 entspricht. Es handelt sich hierbei um Polymere wie sie z. B. in der DE-B 1 295 011 beschrieben sind. In gleicher Weise eignen sich Celluloseester-Bindemittel in dem bezeichneten Bindemittelgemisch. Dies sind Veresterungsprodukte der Cellulose mit Carbonsäuren mit 1 bis 4 Kohlenstoffatomen, wie z. B. Celluloseacetat, Cellulosetriacetat, Celluloseacetopropionat, Celluloseacetobutyrat.

Die Verarbeitung der speziellen verzweigten Polyurethane mit den OH-gruppenhaltigen Harnstoffgruppen an den Kettenenden ggf. in Abmischung mit anderen Bindemitteln, zusammen mit dem magnetischen Material und den üblichen Hilfsstoffen zu den erfindungsgemäßen Aufzeichnungsträgern erfolgt in der an sich bekannten Weise.

Als anisotrope magnetische Materialien können die an sich bekannten Pigmente verwendet werden, die die Eigenschaften der resultierenden Magnetschichten wesentlich beeinflussen, wie z. B. Gamma-Eisen(III)-oxid, feinteiliger Magnetit, ferromagnetisches undotiertes oder dotiertes Chromdioxid oder kobaltmodifiziertes Gamma-Eisen(III)-oxid sowie Ferrite und Metallpigmente. Bevorzugt sind nadelförmiges Gamma-Eisen(III-)-oxid, Co-dotiertes Eisen(III)oxid, sowie ferromagnetisches Chromdioxid. Die Teilchengröße beträgt im allgemeinen 0,15 bis 2 µm, bevorzugt ist der Bereich von 0,15 bis 0,8 µm.

Die in den erfindungsgemäßen magnetischen Aufzeichnungsträgern enthaltenen Bindemittel erfordern keine zusätzlichen niedermolekularen Dispergiermittel. Es ist aber möglich Dispergiermittel in im Vergleich zum Stand der Technik geringen Mengen zuzugegeben, wie z.B. Lecithine, N-Talgfett-1,3-diaminodioleat, Polycarbonsäuren, Mono-, Di- oder Polysulfonsäuren, Phosphorsäuren sowie deren Gemische oder Ester oder Salze mit Metallen der ersten bis vierten Gruppe im Periodensystem.

Ferner enthalten die Magnetschichten in kleinen Mengen Zusätze wie Gleitmittel, aber auch Füllstoffe, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente sowie Fettsäureester oder Wachse, Siliconöle, Ruß usw. Die Menge der Zusätze ist die an sich übliche. Sie liegt im allgemeinen unter 10 Gew.%, bezogen auf die Magnetschicht.

Das Mengenverhältnis von magnetischem Material zu Bindemittel in den erfindungsgemäßen Aufzeichnungsmaterialien beträgt zwischen 1 bis 10 und insbesondere 3 bis 6 Gewichtsteile magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z. B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion gegebenenfalls nach dem Zumischen des Polyisocyanatvernetzers filtriert und mit der üblichen Beschichtungsmaschine, z. B. mittels eines Linealgießers, auf den nichtmagnetischen Träger aufgetragen. In der Regel erfolgt eine magnetische Ausrichtung, bevor die

flüssige Beschichtungsmischung auf dem Träger getrocknet wird; letzteres geschieht zweckmäßigerweise in 10 bis 200 Sekunden bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 80°C, geglättet und verdichtet werden.

Dabei hat es sich bei der ggf. zusätzlich durchgeführten Vernetzung der Bindemitteln sehr vorteilhaft erwiesen, die Kalandrierung vorzunehmen bevor die Vernetzung abgeschlossen ist, da die OH-haltigen Polymeren in unvernetztem Zustand sehr gut verdichtet werden können, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

In den erfindungsgemäßen Sulfonatgruppen aufweisenden Polyurethanen sind gegenüber den dem Stand der Technik entsprechenden Polyurethanen die bekannten magnetischen Materialien in üblichen Dispergiereinrichtungen leicht und vor allem mit sehr geringem Zeit- und Energieaufwand zu homogenen hochpigmentierten Dispersionen zu verarbeiten.

Außerdem weisen die erfindungsgemäßen magnetischen Aufzeichnungsträger gegenüber solchen, welche mit den dem Stand der Technik entsprechenden Polyurethanen bzw. Polyurethanmischungen mit geeigneten härteren Lackharzkomponenten als Bindemittel hergestellt sind, verbesserte ELAV-Daten sowie Abriebfestigkeit auf. Zusätzlich können mit Hilfe des mit Polyisocyanat vernetzten OH-gruppenhaltigen Polyurethanbindemittels in vereinfachter und verkürzter Arbeitsweise magnetisch und damit elektroakustisch verbesserte magnetische Aufzeichnungsträger erhalten werden. Ein weiterer Vorteil ist dabei, daß die für die erfindungsgemäßen magnetischen Aufzeichnungsträger geeigneten Polymeren durch die Vernetzung Magnetschichten ergeben, welche auch bei erhöhter Temperatur und Luftfeuchtigkeit beständig sind.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Polymer A

In einem beheizbaren Reaktionsgefäß von 150 000 Volumenteilen Inhalt, ausgerüstet mit Rührer und Rückflußkühler, werden 6 841 Teile eines Polyesterdiols aus Adipinsäure und 1,4-Butandiol (Molekulargewicht ca. 1 000), 777 Teile 1,4-Butandiol, 437 Teile eines Polyether-1,3-diolsulfonats (Molekulargewicht 1 340) und 44 Teile Trimethylolpropan zusammen mit 4 275 Teilen 4,4'-Diphenylmethandiisocyanat in 37 120 Teilen Tetrahydrofuran gelöst und auf 60°C erwärmt. Die Komponenten werden bis zu einer Endviskosität von 2 Pas (bei 60°C) umgesetzt. Der NCO-Gehalt beträgt 0,03 %. Anschließend wird mit 50 380 Teilen Tetrahydrofuran auf einen Feststoffgehalt von 12,5 % verdünnt. Gleichzeitig wird die Reaktion durch Zugabe von 127 Teilen Diethanolamin abgestoppt. Der K-Wert des gebildeten Polymeren beträgt 59,1, gemessen als 1%ige Lösung in Dimethylformamid.

Polymer B

Die Zusammensetzung und Herstellung erfolgt wie bei Polymer A beschrieben. Die Komponenten werden jedoch nur bis zu einer Endviskosität von 0,5 Pas (bei 60°C) umgesetzt. Der NCO-Gehalt beträgt 0,1 %. Der K-Wert des gebildeten Polymeren beträgt 52,3, gemessen als 1%ige Lösung in Dimethylformamid.

Polymer C

In einem beheizbaren Reaktionsgefäß von 150 000 Volumenteilen Inhalt, ausgerüstet mit Rührer und Rückflußkühler, werden 6 897 Teile eines Polyesterdiols aus Adipinsäure und 1,4-Butandiol (Molekulargewicht ca. 1 000), 791 Teile 1,4-Butandiol, 330 Teile eines Polyether-1,3-diolsulfonats (Molekulargewicht 1340) und 44 Teile Trimethylolpropan zusammen mit 4 311 Teilen 4,4'-Diphenylmethandiisocyanat in 371 217 Teilen Tetrahydrofuran gelöst und auf 60°C erwärmt. Die Komponenten werden bis zu einer Endviskosität von 2 Pas (bei 60°C) umgesetzt. Der NCO-Gehalt beträgt 0,03 %. Anschließend wird mit 50 383 Teilen Tetrahydrofuran auf einen Feststoffgehalt von 12,5 % verdünnt. Gleichzeitig wird die Reaktion durch Zugabe von 128 Teilen Diethanolamin abgestoppt. Der K-Wert des gebildeten Polymeren beträgt 58,3, gemessen als 1%ige Lösung in Dimethylformamid.

Polymer D

In einem beheizbaren Reaktionsgefäß von 150 000 Volumenteilen Inhalt, ausgerüstet mit Rührer und Rückflußkühler, werden 8 912 Teile eines Polyesterdiols aus Adipinsäure, Isophthalsäure und 1,6-Hexandiol (Molekulargewicht ca. 1 000), 1 021 Teile 1,4-Butandiol, 574 Teile eines Polyether-1,3-diolsulfonats (Molekulargewicht 1 340) und 57 Teile Trimethylolpropan zusammen mit 5 721 Teilen 4,4'-Diphenyl-methandiisocyanat in 48 357 Teilen Tetrahydrofuran gelöst und auf 60°C erwärmt. Die Komponenten werden bis zu einer Endviskosität von 250 mPas (bei 60°C) umgesetzt. Der NCO-Gehalt beträgt 0,09 %. Anschließend wird mit 34 472 Teilen Tetrahydrofuran auf einen Feststoffgehalt von 16,5 % verdünnt. Gleichzeitig wird die Reaktion durch Zugabe von 180 Teilen Diethanolamin abgestoppt. Der K-Wert des gebildeten Polymeren beträgt 50,1, gemessen als 1%ige Lösung in Dimethylformamid.

Polymer E

Die Zusammensetzung und Herstellung erfolgt wie Polymer D beschrieben. Die Reaktion wird jedoch statt mit Diethanolamin mit 222 Teilen Dibutylamin abgestoppt.

Polymer F

In einem beheizbaren Reaktionsgefäß von 150 000 Volumenteilen Inhalt, ausgerüstet mit Rührer und Rückflußkühler, werden 6 637 Teile eines Polycarbonatdiols (Molekulargewicht ca. 2 000), 4 195 Teile ethoxyliertes 2,2-Bis(4-hydroxyphenyl)-propan, 560 Teile eines Polyether-1,3-diolsulfonat (Molekulargewicht 1340) und 74 Teile Trimethylolpropan zusammen mit 4 818 Teilen 4,4'-Diphenylmethandiisocyanat in 48 194 Teilen Tetrahydrofuran gelöst und auf 60°C erwärmt. Die Komponenten werden bis zu einer Endviskosität von 250 mPas (bei 60°C) umgesetzt. Der NCO-Gehalt beträgt 0,06 %. Anschließend wird mit 34 470 Teilen Tetrahydrofuran auf einen Feststoffgehalt von 16,5 % verdünnt. Gleichzeitig wird die Reaktion durch Zugabe von 179 Teilen Diethanolamin abgestoppt. Der K-Wert des gebildeten Polymeren beträgt 51,3, gemessen als 1%ige Lösung in Dimethylformamid.

Polymer G (Vergleichsprodukt)

In einem beheizbaren Reaktionsgefäß von 150 000 Volumenteilen Inhalt, ausgerüstet mit Rührer und Rückflußkühler, werden 7 071 Teile eines Polyesterdiols aus Adipinsäure und 1,4-Butandiol (Molekulargewicht ca. 1 000), 833 Teile 1,4-Butandiol und 45 Teile Trimethylolpropan zusammen mit 4 419 Teilen 4,4'-Diphenylmethandiisocyanat in 37 107 Teilen Tetrahydrofuran gelöst und auf 60°C erwärmt. Die Komponenten werden bis zu einer Endviskosität von 2 Pas (bei 60°C) umgesetzt. Der NCO-Gehalt beträgt 0,05 %. Anschließend wird mit 50 393 Teilen Tetrahydrofuran auf einen Feststoffgehalt von 12,5 % verdünnt. Gleichzeitig wird die Reaktion durch Zugabe von 131 Teilen Diethanolamin abgestoppt. Der K-Wert des gebildeten Polymeren beträgt 59,8, gemessen als 1%ige Lösung in Dimethylformamid.

Polymer H (Vergleichsprodukt)

In einem beheizbaren Reaktionsgefäß von 150 000 Volumenteilen Inhalt, ausgerüstet mit Rührer und Rückflußkühler, werden 9 273 Teile eines Polyesterdiols aus Adipinsäure, Isophthalsäure und 1,6-Hexandiol (Molekulargewicht ca. 1 000), 1 103 Teile 1,4-Butandiol und 60 Teile Trimethylolpropan zusammen mit 5 847 Teilen 4,4'-Diphenyl-methandiisocyanat in 48 847 Teilen Tetrahydrofuran gelöst und auf 60°C erwärmt. Die Komponenten werden bis zu einer Endviskosität von 2 Pas (bei 60°C) umgesetzt. Der NCO-Gehalt beträgt 0,03 %. Anschließend wird mit 34 474 Teilen Tetrahydrofuran auf einen Feststoffgehalt von 16,5 % verdünnt. Gleichzeitig wird die Reaktion durch Zugabe von 189 Teilen Diethanolamin abgestoppt. Der K-Wert des gebildeten Polymeren beträgt 58,7, gemessen als 1%ige Lösung in Dimethylformamid.

Beispiel 1

In eine Stahlkugelmühle von 6 l Rauminhalt, gefüllt mit 890 Teilen Stahlkugeln werden in Phase I 100 Teile eines ferromagnetischen Chromdioxidpigments mit einer Koerzitivfeldstärke (Hc) von 41,5 kA/m und spezifischer Oberfläche (SSA) von 26,5 $m^2/g$ und 3 Teile eines $\alpha$-Eisenoxids mit einer spezifischen Oberfläche von 3 $m^2/g$ sowie 8,33 Teile Polymer B und 160 Teile Tetrahydrofuran eingefüllt und nach intensivem Mischen 72 Stunden dispergiert. Anschließend werden in Phase II weitere 13,88 Teile Polymer B, 1 Teil Isotridecylstearat,

0,5 Teile Myristinsäure sowie 102 Teile THF hinzugefügt und weitere 72 Stunden dispergiert. Die Dispersion wurde sodann unter Druck durch einen Filter von 5 µm Porenweite filtriert. Mit einem Linealgießer wurde eine 23,5 µm starke Polyethylenterephthalatfolie mit der Dispersion beschichtet und nach Durchlaufen eines Magnetfeldes die Beschichtung bei Temperaturen zwischen 60 und 100°C getrocknet. Durch Hindurchführen zwischen beheizten Walzen (90°C, Liniendruck 200 kg/cm) wurde die Magnetschicht verdichtet und geglättet. Die resultierende Dicke betrug 3,5 µm. Die beschichtete Folie wurde anschließend in Bänder von 12,65 mm Breite geschnitten.

Vergleichsversuch 1

Das Verfahren erfolgt wie in Beispiel 1 beschrieben, jedoch mit der Ausnahme, daß als Polyurethanelastomer das Polymer G eingesetzt wird.

Vergleichsversuch 2

Das Verfahren erfolgt wie in Beispiel 1 beschrieben, jedoch mit der Ausnahme, daß als Polyurethanelastomer ein Produkt eingesetzt wird, das nach dem Schmelzkondensationsverfahren hergestellt wird und wie es beispielsweise in DE-AS 12 95 001 beschrieben ist.

Der Glanz wurde mit einem Dr.-Lange-Reflektometer unter einem Winkel von 60° von einem Handabstrich ermittelt. Je höher die Glanzwerte liegen, desto besser ist die Dispergierung ausgefallen.

Hierzu wird der Handabstrich mit einem 40-µm-Rakel bei einer Abzugsgeschwindigkeit von 1 m/s auf eine 24 µm dicke Polyethylenterephthalatfolie aufgebracht.

Die Messung der magnetischen Eigenschaften erfolgte mit einem Schwingmagnetometer in einem Meßfeld von 100 kA/m. Bestimmt wurde die remanente Magnetisierung $M_r$ in [mT] sowie der Richtfaktor RF, das ist das Verhältnis der remanenten Magnetisierung längs zur Laufrichtung zu derjenigen quer dazu.

Tabelle 1

| | Polymer | Glanz (60°C) nach Phase I | II | RF | $M_r$ [mT] |
|---|---|---|---|---|---|
| Beispiel 1 | B | 87 | 26 | 2,6 | 167 |
| Vergl.-Beispiel 1 | G | keine Dispergierung | | | |
| Vergl.-Beispiel 2 | | 13 | 7 | 1,8 | 119 |

Beispiele 2, 3 und 4

Das Verfahren erfolgt wie in Beispiel 1 beschrieben, jedoch mit der Ausnahme, daß als Polyurethanelastomer die entsprechenden Polymere D, E bzw. F eingesetzt werden.

Vergleichsversuch 3

Das Verfahren erfolgt wie in Beispiel 1 beschrieben, jedoch mit der Ausnahme, daß als Polyurethanelastomer das Polymer H eingesetzt wird.

Vergleichsversuch 4

Das Verfahren erfolgt wie in Beispiel 1 beschrieben, jedoch mit der Ausnahme, daß in Phase I statt des Polymers B ein Gemisch aus 78 Teilen des Polymers H und 22 Teilen eines Polyvinylformals, bestehend aus 82 % Vinylformal-, 12 % Vinylacetat- und 6 % Vinylalkoholeinheiten und daß in Phase II statt des Polymers B das Polymer H eingesetzt werden. Weiterhin werden noch in die Phase I als Dispergiermittel 0,5 Teile N-Talgfett-1,3-di-aminodioleat und 1 Teil Zinkstearat hinzugegeben. Alle übrigen Komponenten sowie die Verfahrensweise sind wie in Beispiel 1 beschrieben.

In nachstehender Tabelle sind die Testresultate zusammengefaßt. Die Vorteile der erfindungsgemäßen

Polymere D, E und F gegenüber dem nicht erfindungsgemäßen Polymeren H sind einmal im Dispergierergebnis zu sehen. Bei der Verwendung von Polymer H ohne zusätzliche Hilfsmittel ist keine ordnungsgemäße Dispergierung möglich (Vergleichsversuch 3). Erst der Zusatz von Polyvinylformal sowie von Dispergiermitteln ermöglicht die Herstellung von Dispersionen, mit denen Magnetbänder erhalten werden können.

Tabelle 2

| | Polymer | Glanz (60°C) nach Phase I | II | RF | $M_r$ [mT] |
|---|---|---|---|---|---|
| Beispiel 2 | D | 85 | 68 | 3,0 | 158 |
| Beispiel 3 | E | 81 | 62 | 3,0 | 177 |
| Beispiel 4 | F | 92 | 76 | 3,1 | 175 |
| Vergl.-Versuch 3 | H | keine Dispergierung | | | |
| Vergl.-Versuch 4 | H | 84 | 51 | 3,1 | 168 |

Die deutliche Überlegenheit der Magnetbänder gemäß den Beispielen 2 bis 4 gegenüber einem nicht erfindungsgemäßen Band gemäß Vergleichsbeispiel 4 ist auch aus dem Abriebverhalten zu ersehen, das ein Maß für die mechanische Stabilität der Magnetschicht darstellt.

Das Abriebverhalten in der Anwendung wird wie folgt bestimmt: Die Magnetbänder werden in Computerband-Kassetten für IBM-3480-Kassettenlaufwerke konfektioniert. Die Computerband-Kassette wird auf einem Kassettenlaufwerk (z.B. IBM-3480 oder Comparex 6380) vom Anfang des Bandes bis zum Ende des Bandes beschriftet. Danach wird das Band zum Anfang zurückgespult. Dieser Vorgang wird 400mal wiederholt. Zwischen den Durchläufen erfolgt keine Reinigung des Schreib-/Lesekopfes. Nach Beendigung der 400 Zyklen wird ein transparentes Klebeband auf den Schreib-/Lesekopf geklebt. Der während der 400 Zyklen am Schreib-/Lesekopf abgelagerte Abrieb wird so von dem Klebeband aufgenommen. Das Klebeband wird anschließend auf ein weißes Papier geklebt und der Abrieb wird visuell beurteilt. Hierfür werden, wie folgt, Noten vergeben:

| Abrieb-Note | | |
|---|---|---|
| 1 | sehr gut | keine Schwärzung |
| 2 | gut | Hauch von Schwärzung |
| 3 | befriedigend | deutliche Schwärzung |
| 4 | ausreichend | starke Schwärzung |
| 5 | mangelhaft | Schichtausrisse |

Während das mit dem herkömmlichen Bindemittel hergestellte Magnetband im Vergleichsbeispiel 4 Abriebspuren mit deutlich abgebildeter Kopfstruktur zeigt, ist bei den mit den erfindungsgemäßen Bindemitteln hergestellten Magnetbandkassetten praktisch kein Abrieb festzustellen:

Tabelle 3

| | Abrieb-Note |
|---|---|
| Beispiel 2 | 1 - 2 |
| Beispiel 3 | 1 |
| Beispiel 4 | 1 - 2 |
| Vergl.-Versuch 4 | 2 - 3 |

## Patentansprüche

1. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, dadurch gekennzeichnet, daß als thermoplastisches Polyurethan ein in Tetrahydrofuran lösliches, isocyanatgruppenfreies, verzweigtes Polyurethan mit OH-gruppenhaltigen Harnstoffgruppen an den Kettenenden und einem Molekulargewicht zwischen 30 000 und 200 000 eingesetzt wird, welches aus
   A) 1 Mol eines Polydiols mit einem Molekulargewicht zwischen 400 und 10 000
   B) 0,3 bis 10 Mol eines Gemisches aus
      B1) mindestens einem Diol mit 2 bis 18 Kohlenstoffatomen und
      B2) einem mindestens eine Sulfonatgruppe aufweisenden Diol,
   C) 0,01 bis 1 Mol eines Tri- oder Polyols mit 3 bis 25 Kohlenstoffatomen,
   D) 1,3 bis 13 Mol mindestens eines Diisocyanats mit 6 bis 30 Kohlenstoffatomen und
   E) 0,09 bis 2 Mol eines Aminoalkohols mit 2 bis 16 Kohlenstoffatomen

   hergestellt wird, mit der Maßgabe, daß das Verhältnis der OH-Gruppen der Komponenten A bis C zu den NCO-Gruppen der Komponente D zu den Amingruppen der Komponente E wie 1 : 1,03 bis 1,3 : 0,03 bis 0,3 beträgt.

2. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, dadurch gekennzeichnet, daß als thermoplastisches Polyurethan ein in Tetrahydrofuran lösliches, isocyanatgruppenfreies, verzweigtes Polyurethan mit OH-gruppenfreien Harnstoffgruppen an den Kettenenden und einem Molekulargewicht zwischen 30 000 und 200 000 eingesetzt wird, welches aus
   A) 1 Mol eines Polydiols mit einem Molekulargewicht zwischen 400 und 10 000
   B) 0,3 bis 10 Mol eines Gemisches aus
      B1) mindestens einem Diol mit 2 bis 18 Kohlenstoffatomen und
      B2) einem mindestens eine Sulfonatgruppe aufweisenden Diol,
   C) 0,01 bis 1 Mol eines Tri- oder Polyols mit 3 bis 10 Kohlenstoffatomen,
   D) 1,3 bis 13 Mol mindestens eines Diisocyanats mit 6 bis 30 Kohlenstoffatomen und
   E) 0,09 bis 2 Mol eines OH-gruppenfreien Monoamins mit 2 bis 16 Kohlenstoffatomen

   hergestellt wird, mit der Maßgabe, daß das Verhältnis der OH-Gruppen der Komponenten A bis C zu den NCO-Gruppen der Komponente D zu den Amingruppen der Komponente E wie 1 : 1,03 bis 1,3 : 0,03 bis 0,3 beträgt.

3. Magnetischer Aufzeichnungsträger gemäß Anspruch 2, dadurch gekennzeichnet, daß das in Tetrahydrofuran lösliche, isocyanatgruppenfreie, verzweigte Polyurethan mit OH-gruppenhaltigen Harnstoffgruppen an den Kettenenden mit einem Molekulargewicht zwischen 30 000 und 200 000 mit einem Isocyanat aus der Gruppen der Di-, Tri- und Polyisocyante und der Isocyanatprepolymere mit einem Molgewicht bis zu 10 000 vernetzt wird.

4. Magnetischer Aufzeichnungsträger gemäß Anspruch 1, dadurch gekennzeichnet, daß das in Tetrahydrofuran lösliche, isocyanatgruppenfreie, verzweigte Polyurethan mit OH-gruppenfreien Harnstoffgruppen an den Kettenenden mit einem Molekulargewicht zwischen 40 000 und 200 000 zusammen mit einem Isocyanat aus der Gruppen der Di-, Tri- und Polyisocyanate und der Isocyanatprepolymere mit einem Molgewicht bis zu 10 000 eingesetzt wird.

5. Magnetische Aufzeichnungsträger gemäß Anspruch 1, 2, 3 oder 4, dadurch gekennzeichnet, daß die Komponente B 2) eine Verbindung der Formel (I) ist
   Formel I:

$$R^1CH_2O\text{-}(C_2H_4O\text{-})_n(C_3H_7O\text{-})_mCH_2CHR^3CH_2\text{-}SO_3X\ ,$$

   wobei
   $R^1$ =

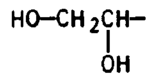 , 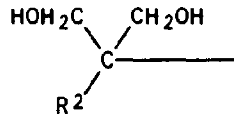 ,

$R^2$ = $CH_3$-, $C_2H_5$-, $C_3H_7$-,
$R^3$ = H- oder $CH_3$-,
X = H-, Alkali- oder Ammonium,
n = 0 bis 100,
m = 0 bis 50 und
$n + m \geqq 1$
ist.

6. Magnetischer Aufzeichnungsträger gemäß Anspruch 1, 2, 3 oder 4, dadurch gekennzeichnet, daß die Komponente B 2) eine Verbindung der Formel (I) ist
Formel I:

$$R^1CH_2O\text{-}(C_2H_4O\text{-})_n(C_3H_7O\text{-})_mCH_2CHR^3CH_2\text{-}SO_3X ,$$

wobei
$R^1$ =

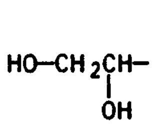 , 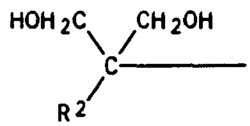 ,

$R^2$ = $CH_3$-, $C_2H_5$-, $C_3H_7$-,
$R^3$ = H- oder $CH_3$-,
X = H-, Alkali- oder Ammonium,
n = 0 bis 100,
m = 0 bis 50 und
$n + m \geqq 1$
ist,
und als Komponente D) 4,4'-Diphenylmethandiisocyanat eingesetzt wird.

7. Magnetischer Aufzeichnungsträger gemäß Anspruch 1, 2, 3 oder 4, dadurch gekennzeichnet, daß die Komponente B 2) ein Diol der Formel (II) ist

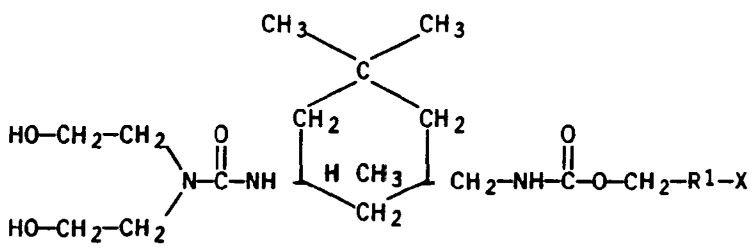 (I)

in welcher
$R^1$ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder

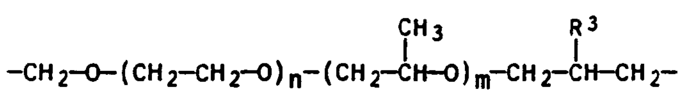

$R^3$ = H oder $CH_3$
n = 0 bis 100
m = 0 bis 50
$n + m \geqq 1$ und
X = $-SO_3M$
worin M für H, Li, Na, K, Ammonium oder Akyl steht, darstellt.

8. Magnetischer Aufzeichnungsträger gemäß Anspruch 1, 2, 5, 6 oder 7, dadurch gekennzeichnet, daß die OH-Endgruppen zu mehr als 80 % aus einer

$-NH-CO-NR^2-R^1-OH$ oder 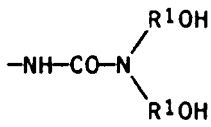 -Gruppe bestehen,

wobei
$R^1$ = $(CH_2)_n$-,
$R^2$ = H, $-CH_3$, $-(CH_2)_n-CH_3$ und
n = 1 bis 10
bedeuten.

9. Magnetischer Aufzeichnungsträger gemäß einem der Ansprüche 1 bis 8, dadurch gekennzeichnet, daß das in Tetrahydrofuran lösliche, isocyanatgruppenfreie, verzweigte Polyurethan mit Harnstoffgruppen an den Kettenenden als alleiniges Bindemittel eingesetzt wird.

## Claims

1. A magnetic recording medium consisting of a nonmagnetic substrate and at least one magnetic layer bonded thereon and based on a magnetic material finely distributed in a binder consisting of not less than 50% by weight of a thermoplastic polyurethane, wherein the thermoplastic polyurethane used is an isocyanate-free, branched polyurethane which is soluble in tetrahydrofuran and has OH-containing urea groups at the chain ends and a molecular weight of from 30,000 to 200,000 and which is prepared from
   A) 1 mol of a polydiol having a molecular weight of from 400 to 10,000,
   B) from 0.3 to 10 mol of a mixture of
      B1) one or more diols of 2 to 18 carbon atoms and
      B2) a diol having one or more sulfonate groups,
   C) from 0.01 to 1 mol of a tri- or polyol of 3 to 25 carbon atoms,
   D) from 1.3 to 13 mol of one or more diisocyanates of 6 to 30 carbon atoms and
   E) from 0.09 to 2 mol of an amino alcohol of 2 to 16 carbon atoms,

   with the proviso that the ratio of the OH groups of the components A to C to the NCO groups of component D to the amino groups of component E is 1 : 1.03-1.3 : 0.03-0.3.

2. A magnetic recording medium consisting of a nonmagnetic substrate and one or more magnetic layers bonded thereon and based on a magnetic material finely distributed in a binder consisting of not less than 50% by weight of a thermoplastic polyurethane, wherein the thermoplastic polyurethane used is an isocyanate-free, branched polyurethane which is soluble in tetrahydrofuran and has OH-free urea groups at the chain ends and a molecular weight of from 30,000 to 200,000 and which is prepared from
   A) 1 mol of a polydiol having a molecular weight of from 400 to 10,000,
   B) from 0.3 to 10 mol of a mixture of
      B1) one or more diols of 2 to 18 carbon atoms and
      B2) a diol having one or more sulfonate groups,
   C) from 0.01 to 1 mol of a tri- or polyol of 3 to 10 carbon atoms,
   D) from 1.3 to 13 mol of one or more diisocyanates of 6 to 30 carbon atoms and
   E) from 0.09 to 2 mol of an OH-free monoamine of 2 to 16 carbon atoms,

   with the proviso that the ratio of the OH groups of components A to C to the NCO groups of component D to the amino groups of component E is 1 : 1.03-1.3 : 0.03-0.3.

3. A magnetic recording medium as claimed in claim 2, wherein the isocyanate-free, branched polyurethane which is soluble in tetrahydrofuran and has OH-containing urea groups at the chain ends and a molecular weight of from 30,000 to 200,000 is crosslinked with an isocyanate from the group consisting of the di-, tri- and polyisocyanates and of the isocyanate prepolymers having a molecular weight of up to 10,000.

4. A magnetic recording medium as claimed in claim 1, wherein the isocyanate-free, branched polyurethane which is soluble in tetrahydrofuran and has OH-free urea groups at the chain ends and a molecular weight of from 40,000 to 200,000 is crosslinked with an isocyanate from the group consisting of the di-, tri- and polyisocyanates and of the isocyanate prepolymers having a molecular weight of up to 10,000.

5. A magnetic recording medium as claimed in claim 1, 2, 3 or 4, wherein component B2) is a compound of the formula (I)

$$R^1CH_2O\text{-}(C_2H_4O\text{-})_n(C_3H_7O\text{-})_mCH_2CHR^3CH_2\text{-}SO_3X\ , \qquad (I)$$

where $R^1$ is

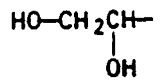 or 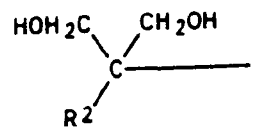 ,

$R^2$ is $CH_3$-, $C_2H_5$- or $C_3H_7$-, $R^3$ is H- or $CH_3$-, X is H-, an alkali metal or ammonium, n is from 0 to 100, m is from 0 to 50 and $n + m \geqq 1$.

6. A magnetic recording medium as claimed in claim 1, 2, 3 or 4, wherein component B2) is a compound of the formula (I)

$$R^1CH_2O\text{-}(C_2H_4O\text{-})_n(C_3H_7O\text{-})_mCH_2CHR^3CH_2\text{-}SO_3X\ , \qquad (I)$$

where $R^1$ is

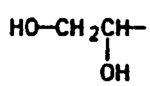 or 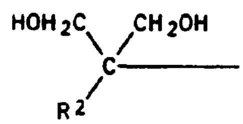 ,

$R^2$ is $CH_3$-, $C_2H_5$- or $C_3H_7$-, $R^3$ is H- or $CH_3$-, X is H-, an alkali metal or ammonium, n is from 0 to 100, m is from 0 to 50 and $n + m \geqq 1$, and 4,4'-diphenylmethane diisocyanate is used as component D).

7. A magnetic recording medium as claimed in claim 1, 2, 3 or 4, wherein component B2) is a diol of the formula (II)

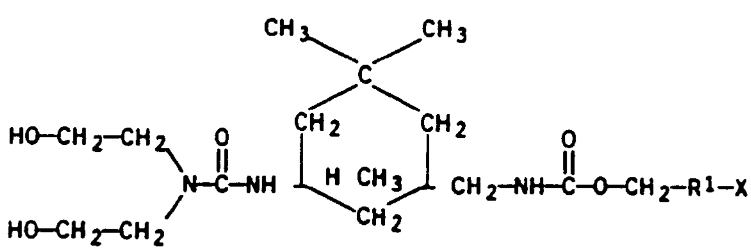 (II)

where $R^1$ is a straight-chain or branched or cyclic radical of 1 to 40 carbon atoms which contains from 20 to 86% by weight of carbon atoms, or

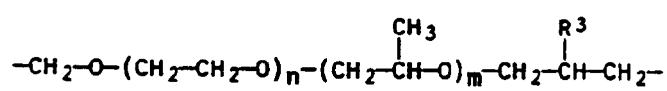

where $R^3$ is H or $CH_3$, n is from 0 to 100, m is from 0 to 50, n + m ≧ 1 and X is $-SO_3M$, where M is H, Li, Na, K or ammonium and $M^1$ and $M^2$ may be identical or different and are each H, Li, Na, K or alkyl.

**8.** A magnetic recording medium as claimed in claim 1, 2, 5, 6 or 7, wherein more than 80% of the terminal OH groups consist of a

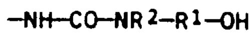 or 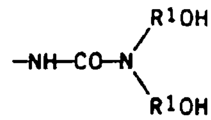

group, where $R^1$ is $-(CH_2)_n-$, $R^2$ is H, $-CH_3$ or $-(CH_2)_n-CH_3$ and n is from 1 to 10.

**9.** A magnetic recording medium as claimed in any of claims 1 to 8, wherein the isocyanate-free, branched polyurethane which is soluble in tetrahydrofuran and has urea groups at the chain ends is used as the sole binder.

## Revendications

**1.** Supports d'enregistrements magnétiques consistant en une matière de support non magnétique et, appliquée sur celle-ci et solidement adhérente, une couche magnétique à base d'une matière magnétique à l'état de fine division dans un liant consistant, pour au moins 50 % en poids, en un polyuréthanne thermoplastique, caractérisés en ce que l'on utilise en tant que polyuréthanne thermoplastique un polyuréthanne ramifié exempt de groupe isocyanate, soluble dans le tétrahydrofuranne, portant aux extrémités de chaînes des groupes urée contenant des groupes OH, et ayant un poids moléculaire de 30 000 à 200 000, qui a été préparé à partir de

A) une mole d'un polydiol de poids moléculaire 400 à 10 000,
B) 0,3 à 10 moles d'un mélange de
  B1) au moins un diol en C2-C18 et
  B2) un diol portant au moins un groupe sulfonate,
C) 0,01 à 1 mole d'un tri- ou poly-ol en C3-C25,
D) 1,3 à 13 moles d'au moins un diisocyanate en C6-C30 et
E) 0,09 à 2 moles d'un aminoalcool en C2-C16,

sous réserve que les proportions relatives entre les groupes OH des composants A) à C), les groupes NCO du composant D) et les groupes amino du composant E) sont de 1: 1,03 à 1,3 : 0,03 à 0,3.

**2.** Supports d'enregistrements magnétiques consistant en une matière de support non magnétique et, appliquée sur celle-ci et solidement adhérente, au moins une couche magnétique à base d'une matière magnétique à l'état de fine division dans un liant consistant pour au moiins 50 % en poids en un polyuréthanne thermoplastique, caractérisés en ce que l'on utilise en tant que polyuréthanne thermoplastique un polyuréthanne ramifié exempt de groupe isocyanate, soluble dans le tétrahydrofuranne, portant aux extrémités de chaîne des groupes urée exempts de groupes OH, et ayant un poids moléculaire de 30 000 à 200 000, qui a été préparé à partir de

A) une mole d'un polydiol de poids moléculaire 400 à 10 000,
B) 0,3 à 10 moles d'un mélange de
  B1) au moins un diol en C2-C18 et
  B2) un diol portant au moins un groupe sulfonate
C)0,01 à 1 mol d'un tri- ou poly-ol en C3-C10,
D) 1,3 à 13 moles d'au moins un diisocyanate en C6-C30 et
E) 0,09 à 2 moles d'une monoamine exempte de groupes OH, en C2-C16,

sous réserve que les proportions relatives entre les groupes OH des composants A) à C), les groupes NCO du composant D) et les groupes amino du composant E) sont de 1 : 1,03 à 1,3 0,03 à 0,3.

**3.** Support d'enregistrement magnétiques selon la revendication 2, caractérisé en ce que le polyuréthanne ramifié exempt de groupe isocyanate soluble dans le tétrahydrofuranne portant aux extrémités de chaîne des groupes urée contenant des groupes OH et ayant un poids moléculaire de 30 000 à 200 000 est réticulé par un isocyanate choisi parmi les di-, les tri- et les polyisocyanates et les prépolymères d'isocyanates ayant un poids moléculaire allant jusqu'à 10 000.

4. Support d'enregistrements magnétiques selon la revendication 1, caractérisé en ce que le polyuréthanne ramifié exempt de groupes isocyanate soluble dans le tétrahydrofuranne portant aux extrémités de chaîne des groupes urée exempt de groupes OH et ayant un poids moléculaire de 40 000 à 200 000 est mis en oeuvre avec un isocyanate choisi parmi les di-, les tri- et les polyisocyanates et les prépolymères d'isocyanates ayant un poids moléculaire allant jusqu'à 10 000.

5. Supports d'enregistrements magnétiques selon la revendication 1, 2, 3 ou 4, caractérisés en ce que le composant B2) est un composé de formule I

$$R1CH_2O\text{-}(C_2H_7O\text{-})n(C_3H_7O\text{-})_mCH_2CHR^3CH_2\text{-}SO_3X \qquad (I)$$

dans laquelle R1 =

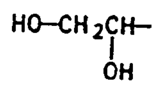
,
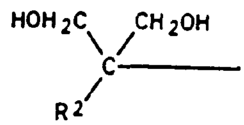
,

R2 = $CH_3$-, $C_2H_5$-, $C_3H_7$-,
R3 = H- ou $CH_3$-,
X = H-, alcali- ou ammonium,
n = 0 à 100,
m = 0 à 50 et
n + m ≧ 1

6. Supports d'enregistrement magnétiques selon la revendication 1, 2, 3 ou 4, caractérisé en ce que le composant B2) est un composé de formule I

$$R^1CH_2O\text{-}(C_2H_4O\text{-})_n(C_3H_7O\text{-})_mCH_2CHR^3CH_2\text{-}SO_3X \qquad (I)$$

dans laquelle
R1 =

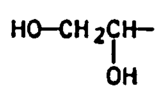
,
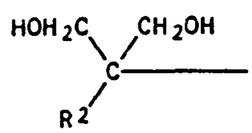
,

$R^2$ = $CH_3$-, $C_2H_5$-, $C_3H_7$-,
$R^3$ = H- ou $CH_3$-,
X = H-, alcali- ou ammonium,
n = 0 à 100,
m = 0 à 50 et
n + m ≧ 1

7. Support d'enregistrements magnétiques selon la revendication 1, 2, 3 ou 4, caractérisé en ce que le composant B2) est un diol de formule II

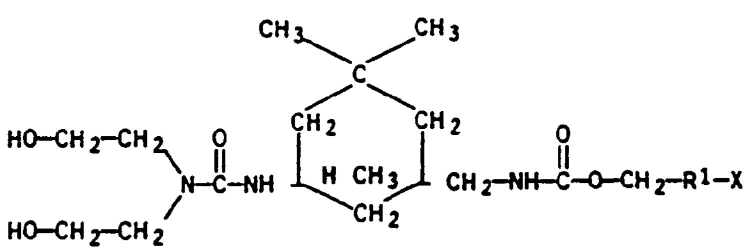
(I)

dans laquelle

$R^1$ représente un radical à chaîne droite ou ramifiée ou cyclique en $C_1$-$C_{40}$ dans lequel les atomes de carbone représentent de 20 à 86 % du poids total, ou le groupe

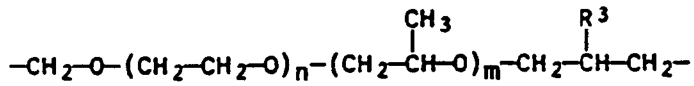

$R^3$ = H ou $CH_3$

n = 0 à 100

m = 0 à 50

n + m ≧ 1 et

X = $-SO_3M$

M représentant H, Li, Na, K ou l'ammonium, $M^1$ et $M^2$ pouvant être identiques ou différents et représentant chacun H, Li, Na, K, un groupe alkyle.

**8.** Support d'enregistrements magnétiques selon la revendication 1, 2, 5, 6 ou 7, caractérisé en ce que les groupes terminaux contenant des groupes OH consistent pour plus de 80 % en groupes

$-NH-CO-NR^2-R^1-OH$ ou 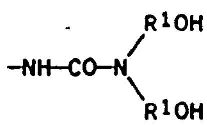

dans lesquels

$R^1 = -(CH_2)_n-$,

$R^2$ = H, $-CH_3$, $-(CH_2)_n-CH_3$ et

n = 1 à 10

**9.** Support d'enregistrements magnétiques selon une des revendications 1 à 8, caractérisé en ce que le polyuréthanne ramifié exempt de groupes isocyanate soluble dans le tétrahydrofuranne et portant des groupes urée aux extrémités de chaînes est mis en oeuvre en tant que liant unique.